# EUROPEAN PATENT SPECIFICATION

(11) **EP 1 247 014 B1**
(45) Date of publication and mention of the grant of the patent: **03.11.2004**
(21) Application number: 00987937.0
(22) Date of filing: 21.12.2000
(51) Int. Cl.: F02D 41/04, B60K 41/02

(54) **METHOD AND APPARATUS TO CONTROL A COMBUSTION ENGINE, AND COMBUSTION ENGINE**
VERFAHREN UND VORRICHTUNG ZUM STEUERN EINER BRENNKRAFTMASCHINE SOWIE BRENNKRAFTMASCHINE
PROCEDE PERMETTANT DE COMMANDER UN MOTEUR A COMBUSTION, DISPOSITIF CORRESPONDANT ET MOTEUR A COMBUSTION

(30) Priority: 30.12.1999 SE 9904855
(43) Date of publication of application: 09.10.2002
(73) Proprietor: Scania CV Aktiebolag (publ), 151 87 Södertälje (SE)
(72) Inventor: JENSEN, Anders, S-646 32 Gnesta (SE); BOSTRÖM, Richard, SE-155 30 Nykvarn (SE); PETTERSSON, Magnus, S-151 55 Södertälje (SE)
(74) Representative: Waldebäck, Hans Olov
(86) International application number: PCT/SE2000/002621
(87) International publication number: WO 2001/050006

(56) References cited:
- EP-A2- 0 323 070
- FR-A1- 2 742 480
- US-A- 5 207 198

## Description

### TECHNICAL FIELD

The present invention relates to a method and an arrangement in accordance with the preamble to patent claims 1 and 8 respectively. The invention also relates to a combustion engine equipped with such an arrangement.

### STATE OF THE ART

When driving a heavy diesel-engine-powered vehicle of the kind which has a mechanical gearbox and a mechanical clutch, e.g. of disc type, the starting sequence is particularly problematical as regards clutch wear. In the case of an inexperienced or unobservant driver, incorrect action during starting may very well lead to such wear becoming very severe. In extreme cases a starting sequence in which a driver applies too much acceleration, causing too high an engine speed, and selects the wrong gear leads in principle to complete burning out of the clutch lining on just one occasion.

It is generally the case when engaging the clutch halves and the elements associated with each of them that their rotation speed has to be adapted, which entails the energy represented by the speed difference being transferred from the side of the clutch half which has the higher speed to the side with the lower speed and/or being given off as friction heat. Starting from zero does of course call for the energy of the engine and the flywheel to be as far as possible converted into kinetic energy for the vehicle.

It will be appreciated that very large quantities of energy may be needed for setting in motion heavy vehicles, sometimes with total weights of up to 50 tonnes. This gives the driver an incentive to run the engine up before starting, and further factors that may be mentioned are the driver's inherent endeavour to avoid problems of generally too low power supply, starting on upgrades, vehicle rolling backwards and risk of the engine stopping if too little acceleration is applied. At the same time, excessive engine speed entails the clutch problems indicated above.

Undue clutch wear entails appreciable extra expense to the vehicle owner, not only due to direct costs of clutch replacement and repair but also due to indirect costs arising from the vehicle being immobilised.

The clutch wear problem arises, however, not only in connection with starting but also to a greater or lesser extent during all clutch operations, e.g. all gear changes.

### OBJECTS AND MOST IMPORTANT CHARACTERISTICS OF THE INVENTION

One object of the present invention is to eliminate or alleviate the problems of the state of the art. This object is achieved with a method and arrangement of the kind mentioned in the introduction by the features indicated in the characterising part of patent claims 1 and 8 respectively. Claim 12 is directed to a Diesel engine with a device according to claim 8.

The result is the achievement in a simple manner of effective protection from abnormal clutch wear both during vehicle starting and on other occasions when the clutch is operated. It may be mentioned that wear is proportional to the square of the speed difference (known as slip) between the clutch halves, so any reduction in this speed difference causes an advantageous reduction in wear and hence longer clutch lining life, longer periods between clutch renewals and shorter vehicle immobilisations.

The invention thus prevents much energy being given off by the engine during the starting sequence. Despite the reduction in fuel supply, the engine's idling speed may certainly be higher than is recommended for starting, but the fact that the fuel supply to the engine is less than that corresponding to such a greater speed during operation means that larger quantities of energy are not involved. Instead, the engine and the associated clutch half will, at the time of engagement, be quickly decelerated with reasonable energy transfer.

It should be noted that the invention is also applicable to automatic systems such as servo-assisted mechanical gearboxes and servo-assisted clutches.

The fact that according to one embodiment of the invention a signal is generated which represents the desired limited fuel supply appropriate to the engine speed and that this signal is used for fuel supply control at an appropriate engine speed creates the possibility of advantageous control adapted to the engine speed so that during, for example, moderate engine overspeed a moderate limitation applies, and when there is substantial overspeed a more substantial limitation applies.

The fact that according to a further embodiment the fuel supply is reduced to nil at a specified engine speed results in a speed limitation which may be advantageous in certain applications and which also prevents any problems of undesirable clutch wear which may still arise at very high idling speeds.

### BRIEF DESCRIPTION OF THE DRAWINGS

Further advantages and features of the invention are indicated by the following description of embodiments with reference to the drawings, in which:
Fig. 1 shows a flowchart of a method according to the invention, and
Fig. 2 depicts schematically a driveline for a vehicle equipped according to the invention.

### DESCRIPTION OF EMBODIMENTS

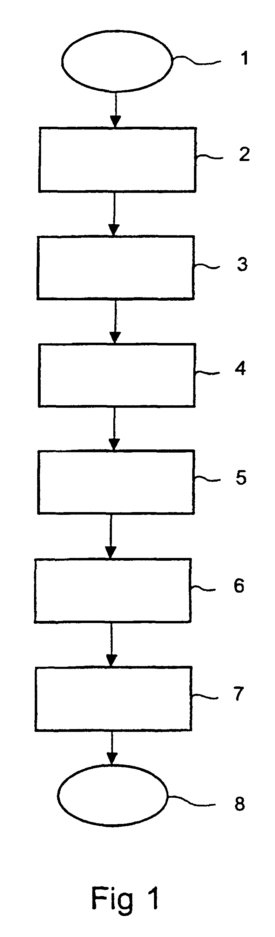

Fig. 1 thus shows a flowchart of a method according to the invention, in which item 1 denotes the start of the sequence, i.e. initiation of the method according to the invention providing protection for the clutch of a heavy diesel-powered vehicle.

Item 2 represents observation of driving parameters such as engine speed and gearbox output shaft speed, which latter describes the vehicle speed. It also observes whether the clutch pedal is depressed.

Item 3 denotes detection of any faulty functions of a vehicle speed sensor and a sensor for detection of clutch state, e.g. in the form of engagement or disengagement of a disc clutch. The sensors are monitored, for example, by signals being examined and compared with given values to assess their validity.

Item 4 is a sequence for calculating the expected energy release in the clutch at the time of engaging the clutch, on the basis of engine speed, gear position, output shaft speed (vehicle speed) and possibly fuel supply (accelerator pedal position).

Item 5 denotes checking of the extent to which the signals received in items 2-4 entail adopting a fuel reduction. The checks involved are: whether the vehicle speed is below the specified threshold value; whether the engine speed exceeds a certain predetermined limit value; whether the clutch pedal (or equivalent) is depressed; whether the sensors are found to be working properly; possibly whether the expected energy release in the clutch exceeds a certain value. If the results of these checks are positive (at least for certain selected ones), i.e. if for example the engine speed is too high and the clutch pedal is depressed etc., a control signal is initiated for reducing the fuel supply as a function of the engine speed. This can be done, for example, by the fuel supply being reduced sharply from a selected acceptable maximum starting speed, e.g. 900 rev/min, to a lower value or nil, and in the latter case a speed limitation is also achieved.

When thereafter the clutch pedal is released, a smaller quantity of energy than previously will be handled by the clutch, which may radically reduce its wear. The result is not only the advantages mentioned but also automatically gentler, more comfortable running of the vehicle.

Item 6 in the flowchart represents the clutch pedal's return to the released position, item 7 any possible deactivation of the sequence, item 8 the end of the sequence.

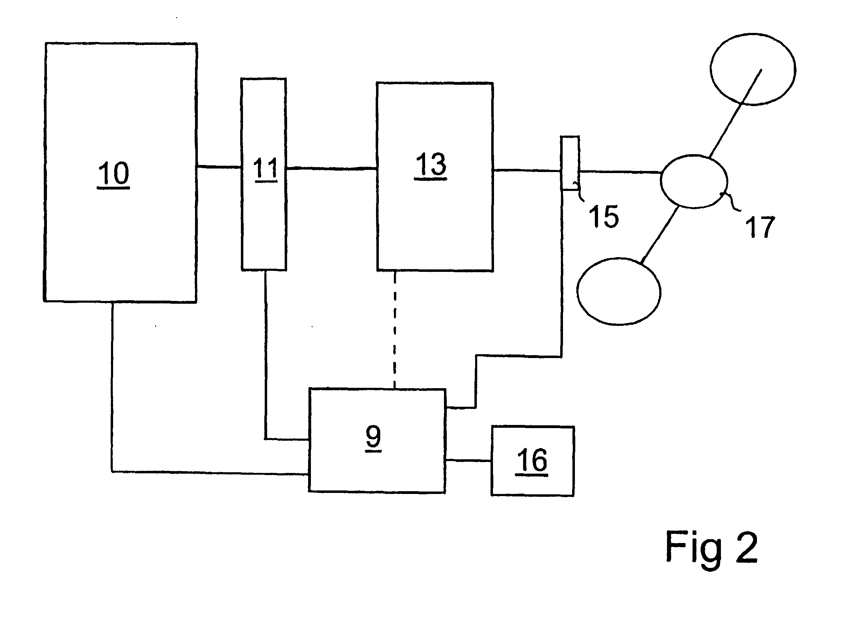

Fig. 2 depicts schematically the control system 9 which advantageously comprises a system according to the invention integrated into or connected to the normal engine control system. Reference 16 denotes a memory for recording driving parameters and rotation speed situations for various gears etc, which may be relevant in connection with the present invention. Fig.2 also depicts schematically the vehicle with its driveline for transmitting driving power from the engine to the powered wheels. In the driveline, reference 10 denotes the engine, 11 the clutch and 13 the gearbox, and reference 15 denotes a speed sensor for the output shaft of the gearbox 13. Reference 17 denotes a final gear.

The engine 10 takes the form of a combustion engine suitable for vehicles, which for heavy-duty vehicles is advantageously a diesel engine. A modem diesel engine has a relatively sophisticated electronic control system for regulating its fuel injection, so the invention can be applied by relatively simple means to existing engines.

The clutch 11 in this embodiment takes the form of a conventional mechanical disc clutch whose components are separated, when it is activated, to bring about an interruption of driving power in the vehicle's driveline during a gearchange operation or while the vehicle is starting or stopping. The clutch is operated in a conventional manner by a clutch pedal (not depicted) operable by the driver, and takes place via a mechanical or hydraulic transmission mechanism, advantageously also including servo devices to facilitate its operation.

The gearbox 13 in this embodiment takes the form of a conventional mechanical gearbox provided with a number of mutually cooperating gearwheels for effecting various gear ratios on the basis of the gear selected by the driver.

Figure 2 also shows the control system 9 communicating with the engine 10, with the clutch 11, with the gearbox output shaft sensor 15 and with the memory 16. It may also communicate with the gearbox 13 (suggested by a broken line) and with an accelerator pedal sensor (not depicted). The control system incorporates not only said sensors but also necessary sensors for detecting the other vehicle parameters required, such as detecting whether the clutch is disengaged (or activated). Engine speed detection may be by using a special sensor, but as signals representing the engine speed are usually already available in the engine's control system, this signal representing the engine may also be used when applying the present invention. The engine's control system also incorporates conventional sensors and devices for regulating the engine's fuel supply.

The invention achieves, all in all, substantially easier starting of a heavy vehicle, meaning putting it into motion, which means that even an untrained driver cannot cause serious clutch wear damage to a vehicle equipped according to the invention. An important advantage of the invention is that the system is inexpensive and can be applied to vehicles which are selected by the operator to be as inexpensive as possible for minimised running cost and which are not equipped with sophisticated but expensive automatic gearchange systems. The invention also serves its purpose even in the case of such automatic systems.

The system also causes reduced starting noise, since the idling speed can be reduced when setting the vehicle in motion.

The foregoing indicates the advantages of the invention during vehicle starting when the clutch has to transmit relatively large torques in connection with setting the vehicle in motion from standstill to a certain speed. The same problems arise, however, in all clutch operations and therefore on the occasion of every gear change when the clutch is operated. Such situations call for vehicle speed threshold values and engine speed values different from those applied during starting. A suitable value for the permitted engine speed is selected for each gear and/or vehicle speed.

## Claims

1. Method for control of a combustion engine (10) for a vehicle of the kind which includes a mechanical gearbox (13) and a manually operable clutch (11), wherein the fuel supply to the combustion engine (10) is limited if monitoring shows that the vehicle's speed is below a prescribed threshold value and that the clutch (11) is disengaged, **characterised in that** the fuel supply to the combustion engine (10) is limited if monitoring also shows that the engine speed exceeds a predetermined value, **in that** the limitation is a function of the engine speed, and **in that** a signal is generated which is representative of desired limited fuel supply on the basis of the engine speed, and that this signal is used for fuel supply control at the current engine speed.

2. Method according to claim 1, **characterised in that** the engine speed is limited by the fuel supply being reduced to nil at a certain specified engine speed.

3. Method according to any one of claims 1-2, **characterised in that** the fuel supply limitation may be engaged and disengaged at will by a driver of the vehicle.

4. Method according to any one of the foregoing claims, **characterised in that** a further condition for fuel supply limitation is that the expected energy release in the clutch (11) during an engagement sequence calculated on the basis of at least the engine speed and vehicle speed at the time is greater than a certain predetermined value.

5. Method according to any one of the foregoing claims, **characterised in that** a further condition for fuel supply limitation is that sensor functions are found to be correct.

6. Method according to any one of the foregoing claims, **characterised in that** the control is applied during vehicle starting.

7. Arrangement for control of a combustion engine (10) for a vehicle of the kind which includes a mechanical gearbox (13) and a manually operable clutch (11), having devices (9,16) for limiting the fuel supply to the combustion engine (10) if monitoring shows that the vehicle's speed is below a prescribed threshold value and the clutch (11) is 5 disengaged, **characterised by** devices (9,16) to limit the fuel supply to the combustion engine (10) if monitoring also shows that the engine speed exceeds a predetermined value, by devices for generating a signal which is representative of desired limited fuel supply on the basis of the engine speed and as a function of the engine speed, and by devices for using this signal for fuel supply control at the current engine speed.

8. Arrangement according to claim 7, **characterised in that** the engine speed is arranged to be limited by the fuel supply being reduced to nil at a certain specified engine speed.

9. Arrangement according to any one of claims 7-8, **characterised by** a changeover switch for engaging and disengaging the fuel supply limitation.

10. Arrangement according to any one of claims 7-9, **characterised by** devices for ascertaining the extent to which the expected energy release in the clutch (11) during an engagement sequence calculated on the basis of at least the engine speed and the vehicle speed at the time is greater than a certain predetermined value, and by the fact that even outside this condition it initiates fuel supply limitation.

11. Arrangement according to any one of claims 7-10, **characterised by** devices for checking that sensor functions are correct, which is a further condition for fuel supply limitation.

12. Diesel engine including an arrangement according to any one of claims 7-11

## Patentansprüche

1. Verfahren zum Steuern eines Verbrennungsmotors (10) für ein Kraftfahrzeug des Typs, dass er ein mechanisches Getriebe (13) und eine manuell betätigbare Kupplung (11) aufweist, wobei die Kraftstoffzufuhr zu dem Verbrennungsmotor (10) begrenzt wird, wenn eine Überwachung zeigt, dass die Fahrzeuggeschwindigkeit unterhalb eines vorbestimmten Schwellenwerts liegt und dass die Kupplung (11) außer Eingriff ist, **dadurch gekennzeichnet, dass** die Kraftstoffzufuhr zu dem Verbrennungsmotor (10) begrenzt wird, wenn die Überwachung auch zeigt, dass die Motordrehzahl einen vorbestimmten Wert überschreitet, dass die Begrenzung eine Funktion der Motordrehzahl ist und dass ein Signal erzeugt wird, das die gewünschte begrenzte Kraftstoffzufuhr auf Grundlage der Motordrehzahl wiedergibt, und dass dieses Signal zur Steuerung der Kraftstoffzufuhr bei der gegenwärtigen Motordrehzahl verwendet wird.

2. Verfahren nach Anspruch 1, **dadurch gekennzeichnet, dass** die Motordrehzahl dadurch begrenzt wird, dass die Kraftstoffzufuhr bei einer bestimmten spezifizierten Motordrehzahl auf Null reduziert wird.

3. Verfahren nach einem der Ansprüche 1 bis 2, **dadurch gekennzeichnet, dass** die Kraftstoffzufuhr-Begrenzung auf Wunsch eines Fahrers des Fahrzeugs aktiviert und deaktiviert werden kann.

4. Verfahren nach einem der vorangehenden Ansprüche, **dadurch gekennzeichnet, dass** eine weitere Bedingung für eine Kraftstoffzufuhr-Begrenzung darin liegt, dass die erwartete freigesetzte Energie in der Kupplung (11) während einer Eingriffsfolge, die zumindest auf Grundlage der Motordrehzahl und der Fahrzeuggeschwindigkeit zu dem Zeitpunkt berechnet wird, größer ist als ein bestimmter vorab definierter Wert.

5. Verfahren nach einem der vorangehenden Ansprüche, **dadurch gekennzeichnet, dass** eine weitere Bedingung für eine Kraftstoffzufuhr-Begrenzung darin liegt, dass Sensorfunktionen als korrekt geprüft werden.

6. Verfahren nach einem der vorangehenden Ansprüche, **dadurch gekennzeichnet, dass** die Steuerung während des Starts des Fahrzeugs ausgeführt wird.

7. Anordnung zum Steuern eines Verbrennungsmotors (10) für ein Fahrzeug des Typs, dass er ein mechanisches Getriebe (13) und eine manuell bedienbare Kupplung (11) umfasst, mit Vorrichtungen (9, 16) zum Begrenzen der Kraftstoffzufuhr zu dem Verbrennungsmotor (10), wenn eine Überwachung zeigt, dass die Fahrzeuggeschwindigkeit unterhalb eines vorbestimmten Schwellenwerts liegt und die Kupplung (11) außer Eingriff ist, **gekennzeichnet durch** Vorrichtungen (9, 16) zum Begrenzen der Kraftstoffzufuhr zu dem Verbrennungsmotor (10), wenn die Überwachung auch zeigt, dass die Motordrehzahl einen vorbestimmten Wert übersteigt, **durch** Vorrichtungen zum Erzeugen eines Signals, das eine gewünschte begrenzte Kraftstoffzufuhr auf Grundlage der Motordrehzahl und als eine Funktion der Motordrehzahl wieder gibt, und **durch** Vorrichtungen zum Verwenden dieses Signals für die Kraftstoffzufuhrsteuerung bei der gegenwärtigen Motordrehzahl.

8. Anordnung nach Anspruch 7, **dadurch gekennzeichnet, dass** die Motordrehzahl derart begrenzt wird, dass die Kraftstoffzufuhr bei einer bestimmten spezifizierten Motordrehzahl auf Null reduziert wird.

9. Anordnung nach einem der Ansprüche 7 bis 8, **gekennzeichnet durch** einen Wechselschalter zum Aktivieren und Deaktivieren der Kraftstoffzufuhr-Begrenzung.

10. Anordnung nach einem der Ansprüche 7 bis 9, **gekennzeichnet durch** Vorrichtungen zum Bestätigen des Ausmaßes, zu dem die erwartete Energiefreisetzung in der Kupplung (11) während einer Eingriffsfolge, die zumindest auf Grundlage der Motordrehzahl und der Fahrzeuggeschwindigkeit zu der Zeit berechnet wird, größer als ein bestimmter vorab definierter Wert ist, und **durch** die Tatsache, dass selbst außerhalb dieser Bedingung diese eine Kraftstoffzufuhr-Begrenzung einleitet.

11. Anordnung nach einem der Ansprüche 7 bis 10, **gekennzeichnet durch** Vorrichtungen zum Überprüfen, dass Sensorfunktionen korrekt sind, was eine weitere Bedingung für die Kraftstoffzufuhr-Begrenzung darstellt.

12. Dieselmotor, umfassend eine Anordnung nach einem der Ansprüche 7 bis 11.

## Revendications

1. Procédé pour commander un moteur à combustion (10) pour un véhicule du type qui comporte une boîte de vitesses mécanique (13) et un embrayage pouvant être actionné manuellement (11), dans lequel l'alimentation en carburant du moteur à combustion (10) est limitée si une surveillance indique que la vitesse du véhicule est au-dessous d'une valeur seuil prescrite et que l'embrayage (11) est libéré, **caractérisé en ce que** l'alimentation en carburant du moteur à combustion (10) est limitée si la surveillance indique également que le régime moteur dépasse une valeur prédéterminée, **en ce que** la limitation est fonction du régime moteur, et **en ce qu'**un signal est généré qui est représentatif d'une alimentation en carburant limitée voulue basée sur le régime moteur, et que ce signal est utilisé pour commander l'alimentation en carburant au régime moteur actuel.

2. Procédé selon la revendication 1, **caractérisé en ce que** le régime moteur est limité par l'alimentation en carburant réduite à zéro à un certain régime moteur spécifié.

3. Procédé selon l'une quelconque des revendications 1 à 2, **caractérisé en ce que** la limitation de l'alimentation en carburant peut être activée et désactivée à volonté par un conducteur du véhicule.

4. Procédé selon l'une quelconque des revendications précédentes, **caractérisé en ce qu'**une condition supplémentaire pour la limitation de l'alimentation en carburant est que la libération d'énergie attendue dans l'embrayage (11) pendant une séquence de mise en prise calculée en se basant au moins sur le régime moteur et la vitesse du véhicule à cet instant est supérieure à une certaine valeur prédéterminée.

5. Procédé selon l'une quelconque des revendications précédentes, **caractérisé en ce qu'**une condition supplémentaire pour la limitation de l'alimentation en carburant est que les fonctions de capteur soient jugées correctes.

6. Procédé selon l'une quelconque des revendications précédentes, **caractérisé en ce que** la commande est appliquée pendant un démarrage du véhicule.

7. Agencement pour commander un moteur à combustion (10) pour un véhicule du type qui comporte une boîte de vitesses mécanique (13) et un embrayage pouvant être actionné manuellement (11), ayant des dispositifs (9, 16) pour limiter l'alimentation en carburant du moteur à combustion (10) si une surveillance indique que la vitesse du véhicule est au-dessous d'une valeur seuil prescrite et que l'embrayage (11) est libéré, **caractérisé par** les dispositifs (9, 16) pour limiter l'alimentation en carburant du moteur à combustion (10) si une surveillance indique également que le régime moteur dépasse une valeur prédéterminée, par des dispositifs pour générer un signal qui est représentatif d'une alimentation en carburant limitée voulue basée sur le régime moteur et fonction du régime moteur, et par des dispositifs pour utiliser ce signal pour commander l'alimentation en carburant au régime moteur actuel.

8. Agencement selon la revendication 7, **caractérisé en ce que** le régime moteur est fixé pour être limité par l'alimentation en carburant réduite à zéro à un certain régime moteur spécifié.

9. Agencement selon l'une quelconque des revendications 7 à 8, **caractérisé par** un commutateur inverseur pour activer et désactiver la limitation de l'alimentation en carburant.

10. Agencement selon l'une quelconque des revendications 7 à 9, **caractérisé par** des dispositifs pour établir la mesure dans laquelle la libération d'énergie attendue dans l'embrayage (11) pendant une séquence de mise en prise calculée en se basant au moins sur le régime moteur et la vitesse du véhicule à cet instant est supérieure à une certaine valeur prédéterminée, et par le fait que même en dehors de cette condition elle déclenche la limitation de l'alimentation en carburant.

11. Agencement selon l'une quelconque des revendications 7 à 10, **caractérisé par** des dispositifs pour vérifier que les fonctions de capteur sont correctes, ce qui constitue une condition supplémentaire pour la limitation de l'alimentation en carburant.

12. Moteur diesel incluant un agencement selon l'une quelconque des revendications 7 à 11.
